# EUROPEAN PATENT SPECIFICATION

(11) **EP 3 162 738 B1**
(45) Date of publication and mention of the grant of the patent: **19.09.2018**
(21) Application number: 15191822.4
(22) Date of filing: 28.10.2015
(51) Int. Cl.: B65G 21/18, F26B 15/26, A23G 7/02, A23G 3/02

(54) **MACHINE FOR THERMAL CONDITIONING OF FOOD PRODUCTS**
MASCHINE ZUR THERMISCHEN KONDITIONIERUNG VON NAHRUNGSMITTELN
MACHINE DE CONDITIONNEMENT THERMIQUE DE PRODUITS ALIMENTAIRES

(43) Date of publication of application: 03.05.2017
(73) Proprietor: Selmi S.r.l., 12069 Santa Vittoria d'Alba (Cuneo) (IT)
(72) Inventor: SELMI, Paolo, I-12069 Santa Vittoria d'Alba (CN) (IT); SELMI, Renato, I-12069 Santa Vittoria d'Alba (CN) (IT)
(74) Representative: Frontoni, Stefano

(56) References cited:
- EP-A1- 1 249 168
- FR-A- 1 351 643
- US-A- 4 893 708
- US-A- 4 953 365
- US-A- 5 042 262

## Description

### Field of the invention

The present invention relates to a machine for thermal conditioning of food products. In particular, the present invention is of particular interest in the sector of production of confectionery products obtained from mixes or liquids that are poured into moulds in which they are then cooled until they reach a given consistency.

For the cooling step referred to above, at the level of industrial production there exist systems that comprise cooling tunnels at a controlled temperature, through which the products are moved and in which they remain until they reach the desired consistency.

At the level of homemade production, there are likewise used systems that have substantially the same architecture but considerably smaller dimensions in order to adapt to the limited spaces available in these applications.

On the other hand, it is known that the ever-increasing diffusion throughout the world of local production of confectionery products has given rise to production contexts the majority of which are of small or medium size.

Thermal-conditioning machines for these applications so far available on the market all suffer from the drawback of enabling relatively small volumes of production. The small size of these machines imposes in fact the need to maintain very low rates of feed and makes it possible to treat only a small number of products at a time.

EP1249168, FR1351643 and US4893708 disclose some prior art of the technical background.

### Object of the invention

In the light of what has been said above, the object of the present invention is to provide a thermal-conditioning machine that is particularly suited to use for medium-to-small-size production. The machine described herein is improved as compared to the known solutions indicated above, in particular in terms of small overall dimensions, operating efficiency, and production volumes.

The above object is achieved via a machine that presents the characteristics specified in Claim 1.

### Summary of the invention

In a way in itself already known in the art, the machine described herein comprises a thermal-conditioning chamber and a conveyor system for movement through the aforesaid chamber of a plurality of supports on which the products to be conditioned are arranged.

The machine described herein is characterized, as compared to the solutions so far known, in that its aforementioned conveyor system comprises the following characteristics:
- a helical conveying path, which extends along and around a main axis and defines a plurality of levels; and
- a rotor, which turns about the above axis and is equipped with a plurality of arms that are associated to the various levels of the aforesaid path and are configured for engaging each at least one support positioned on the corresponding level of the aforesaid path.

As will be seen in detail in what follows, the characteristics indicated make it possible to provide a conveying line distributed on a number of levels that are relatively extensive in terms of length but very compact from the volumetric standpoint. At the same time, the above characteristics make it possible to obtain a system for movement of the products along the aforesaid path that is perfectly suited to being contained within the overall dimensions of the conveying path indicated and that in no way hinders the action of thermal conditioning of the products that takes place within the conditioning chamber. As will be seen in what follows, thanks to the above characteristics, the conditioning chamber may moreover advantageously present an as a whole cylindrical configuration and be strictly adherent with its walls to the conveying line.

The claims form an integral part of the technical teaching provided herein in relation to the invention.

### Detailed description of some embodiments

Further characteristics and advantages of the invention will emerge clearly from the ensuing description with reference to the annexed drawings, which are provided purely by way of non-limiting example and in which:

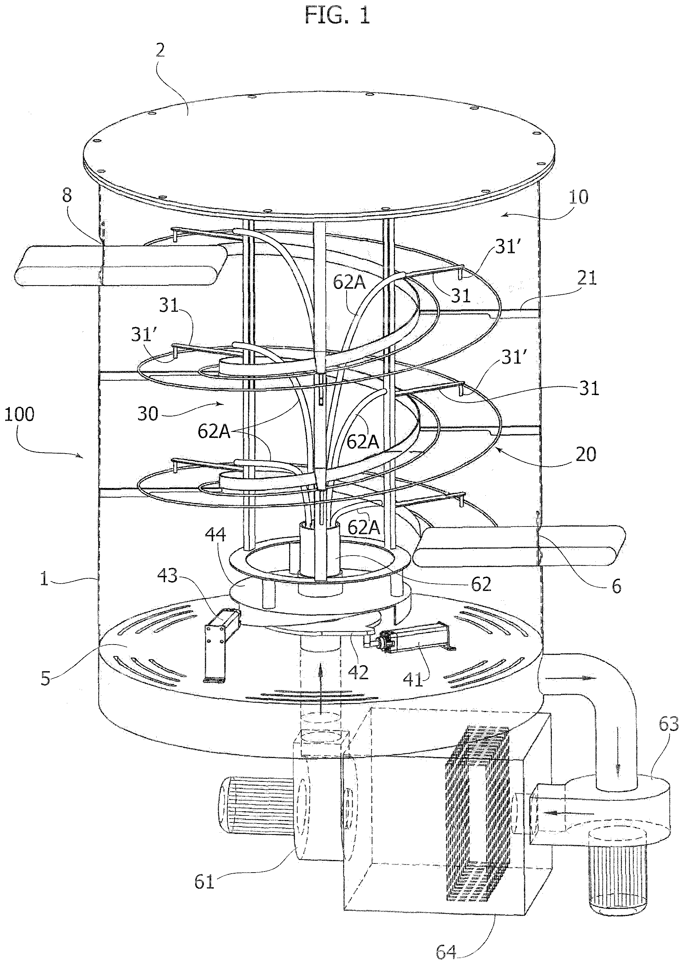

- Figure 1 is a schematic perspective view of an embodiment of the machine described herein; and
- Figures 2A-2D represent, respectively, four successive steps of operation of the machine of Figure 1.

In the ensuing description, various specific details are illustrated aimed at providing an in-depth understanding of the embodiments. The embodiments may be provided without one or more of the specific details, or with other methods, components, or materials, etc. In other cases, known structures, materials, or operations are not shown or described in detail so that various aspects of the embodiment will not be obscured.

The references used herein are only provided for convenience and hence do not define the sphere of protection or the scope of the embodiments.

As indicated above, the machine described herein is a machine for thermal conditioning of foodstuff products. By "thermal conditioning" is here to be understood both a process of cooling and a process of heating of products.

In various embodiments, as in the one illustrated, the machine described herein, designated as a whole in the figure by the reference number 100, comprises an outer cylindrical casing 1, with preferably vertical axis, closed at the top by a plane covering 2 and at the bottom by a plate 5 provided with slits for passage of air.

Defined within the casing 1, between the covering 2 and the plate 5, is the thermal-conditioning chamber of the machine, designated by the reference number 10, into which the products to be conditioned arranged on supports S are conveyed.

Mounted within the chamber 10 is a track 20 for movement of the supports S, which has a helical path that develops along and around the vertical axis I of the casing 1.

In various preferred embodiments, as in the one illustrated, the external diameter of the helix of the track 20 is substantially the same as or slightly smaller than the internal diameter of the casing 1, and at the same time the track 20 has a width that is substantially the same as or smaller than the dimensions of the supports S. This affords the advantage of being able to obtain inside the track 20 a space sufficient for housing the rotor 30, which, as will be seen in what follows, is designed to enable movement of the supports S along the track. By the term "track" is here to be understood the structure or the frame that carries the supports S and on which the supports S run.

Preferably, the track 20 is constituted by a set of metal wires and/or bands - or ones made of any other material that is sufficiently resistant and suitable for the applications indicated - that together constitute a frame with very small surfaces. This on the one hand affords the advantage of reducing the friction between the track 20 and the supports S and on the other hand prevents the track from constituting a sort of barrier that prevents direct flow of the conditioned air against the supports S. In various preferred embodiments, as in the one illustrated, the track 20 is fixed to the walls of the casing 1 via brackets 21.

As may be seen in the figure, the track defines a series of levels set on top of one another and stacked in the vertical direction. Preferably, the vertical distance between two consecutive levels is very small in order to contain within very low values, for example 1°-5°, the angle of inclination of the helix. The number of levels set on top of one another is clearly a function of the production volume that is expected of the machine.

As mentioned above, the machine further comprises a central rotor 30, which shares the axis I of the casing. Given what has been said above, the axis of the rotor in turn coincides with the geometrical axis of the helix of the track 20. The rotor 30 has a plurality of transverse, preferably radial, arms 31, which are arranged on the various levels of the track 20 and are moreover distributed, about the axis I, along the various turns that make up the helix of the track. The arms in question are configured for engaging the supports S that are located on the corresponding levels of the track. The arms in question may for this purpose provide on their distal end a pin 31' projecting underneath, which is to be brought to bear upon a side of the supports S.

The rotor 30 is controlled by appropriate drive means for repeating, during operation of the machine, one and the same movement of rotation by an amount equal to a predefined angular range. During the aforesaid movement, the arms 31 push the respective supports with which they are engaged, for a corresponding stretch of the track.

The aforesaid movement is carried out always starting from the same position so that, before repeating the above rotation, the rotor 30 is turned in the opposite direction so as to return into the same initial position, after it has been released from the support S.

At the end of each rotation, each support S is located within the range of action of a new arm of the rotor, and this, as a result of a new rotation, will push the support, bringing it to a next arm, and so on for each rotation of the rotor.

This repetition of the same movement of rotation is such that, passing from one arm to the other, each support is conveyed from one level of the turn to the next and in this way follows the path of the entire track 20.

It is to be noted that the angular range along which rotation of the rotor occurs is clearly a function of the number of the arms 31 that are provided along the various turns that make up the helix of the track; in preferred embodiments the angular range in question is 45°.

In various preferred embodiments, as in the one illustrated, the rotor 30 can be positioned between a lowered position in which its arms 31 engage the corresponding supports S and a raised position in which the arms are instead located above the supports. The first position is assumed by the rotor during the aforesaid rotation, whereas the second position is assumed during the movement of return to the initial position, so that the arms 31 do not interfere with the supports during the aforesaid movement. Moreover, in various preferred embodiments, during the main rotation, the rotor 30 is simultaneously raised so as to cause the arms 31 to follow a path substantially corresponding to the helix of the track. This is not, however, essential, above all in the cases where the inclination of the helix is of a limited amount (for example, 1° - 5°), so that the arms manage to move along the track - along the predefined angular range - without going into a condition of interference therewith, albeit moving only via a movement of rotation.

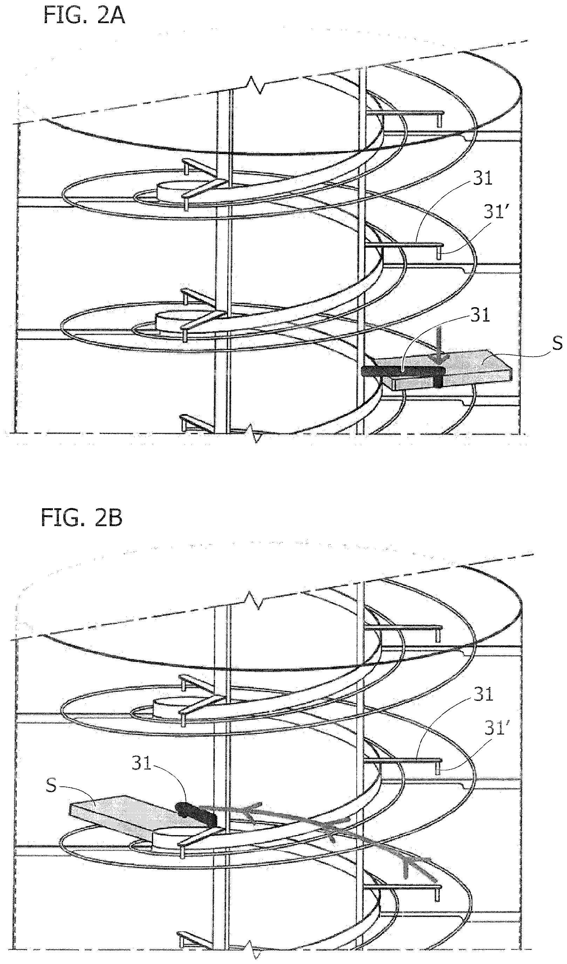

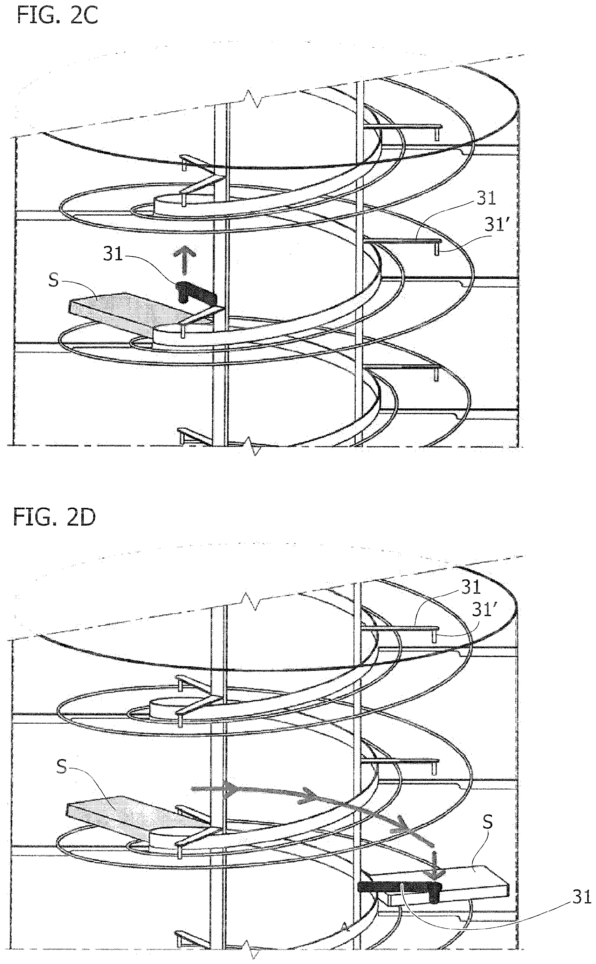

Figures 2A-2C illustrate a complete cycle of the movement of the rotor 30 according to one embodiment. Starting from the initial position (Figure 2A), the arm 21 is rotated through approximately 120° pushing along with it the support S illustrated (Figure 2B). At the end of rotation, the rotor 30 is raised, thus disengaging the support S (Figure 2C), and then turns in the opposite direction, at the same time dropping, so as to return into the initial position (Figure 2D) and engage a new support.

As has been said above, the means for driving the rotor may be of any type according to the specific requirements of the various applications, for example according to the overall dimensions and the costs envisaged in the various cases. In various preferred embodiments, as in the one illustrated, the aforesaid means comprise a first linear actuator 41 constrained to a lever member 42, which is in turn connected to the rotor for driving the latter in its movement of rotation. In order to bring about, instead, the movement of raising and lowering of the rotor, the aforesaid means further comprise a second linear actuator 43, which drives in rotation a cam member 44 designed to generate the raising and lowering movement. A possible further cam member (not illustrated) is associated to the aforesaid lever member 42 for the case where the rotor is also raised during its main movement of rotation.

The machine described herein comprises a control unit (not illustrated), which is configured for controlling the drive means so as to enable the succession of movements of the rotor described above.

The machine described herein comprises an inlet opening 6 at the base of the track 20 and an outlet opening 8 at its top, which are both served by a conveyor belt.

Through the machine a continuous flow of the supports S with the products is hence set up. The machine described herein is hence perfectly suited to the production cycles of traditional systems.

In a way in itself known, the machine further comprises a unit for treatment and movement of the air, which, in a continuous way, distributes conditioned air within the chamber 10, then draws it in through the slits of the plate 5, conditions it, and re-introduces it into the chamber. In the example illustrated, the aforesaid assembly comprises a radial fan 61, which supplies the flow of air through an element for distributing the air into the chamber (designated by the reference 62), an axial fan 63 for intake of the air from the chamber 10, and a conditioning module 64, containing an evaporator, set between the two fans referred to above.

In various preferred embodiments, as in the one illustrated, the distributor element 62 is mounted fixed with respect to the rotor 30 and is, like the latter, set within the central space obtained in the track 20. The distributor element 62 has, for each arm 31 of the rotor, a nozzle 62A positioned up against the arm and mobile therewith so that the support engaged by the arm is at the same time impinged upon directly by the conditioned air. This configuration hence causes the supports S to be practically constantly impinged upon by the flow of conditioned air, during their movement along the track.

Of course, without prejudice to the principle of the invention, the details of construction and the embodiments may vary, even significantly, with respect to what has been illustrated herein purely by way of non-limiting example, without thereby departing from the scope of the invention, as defined in the annexed claims.

## Claims

1. A thermal conditioning machine for thermal conditioning of food products, of the type comprising:
- a conditioning chamber (10) within which a predetermined thermal condition is set up; and
- a conveyor system for movement through the aforesaid chamber of a plurality of supports (S) on which the products to be conditioned are arranged;
the aforesaid machine being **characterized in that** the aforesaid conveyor system comprises:
- a helical conveying path (20) that extends along and about a main axis (I) and defines a plurality of levels, wherein said conveying path is constituted by a track on which said supports (S) are mobile by running thereon, preferably by sliding thereon; and
- a rotor (30) that is configured to turn about said axis and is equipped with a plurality of transverse or radial arms (31), which are associated to the various levels of said path and are configured for engaging each at least one support positioned on the corresponding level of said path so that the rotation of said rotor causes displacement of said at least one support (S) from said corresponding level to or towards the next level.

2. The machine according to Claim 1, comprising a control unit configured for controlling means for driving said rotor (30) in such a way that, during operation of the machine, said rotor (R) repeats one and the same movement of rotation by an amount equal to a given predefined angular range, starting each time from one and the same initial position.

3. The machine according to Claim 2, wherein said predefined range has an extension of less than 360°, preferably less than 180°, even more preferably less than 90°.

4. The machine according to any one of the preceding claims, wherein said rotor (30) is moreover mobile between a first lowered condition in which said arms (31) engage the supports (S) positioned on the corresponding levels of said path, and a second raised condition in which said arms pass over said supports (S) .

5. The machine according to any one of the preceding claims, wherein said rotor (30) can be driven in a movement of raising simultaneous to said movement of rotation so that said arms are moved along a helical path substantially corresponding to said conveying path.

6. The machine according to any one of the preceding claims, comprising an element (62) for distributing air mounted fixed with respect to said rotor (30) and presenting for each arm (31) of the rotor a nozzle (62A) positioned up against the arm and mobile therewith.

7. The machine according to any one of the preceding claims, wherein said conditioning chamber (10) has a cylindrical conformation with axis coinciding with said main axis (I) and, with its walls, is strictly adherent to said conveying path.

8. The machine according to Claim 1, wherein said chamber has a bottom opening (6) for inlet or outlet of the supports that communicates with a initial or final stretch of said conveying path, and wherein said chamber moreover has a top opening (8) for outlet or inlet of said supports that communicates with a final or initial stretch of said conveying path (20).

9. The machine according to Claim 1, wherein said track is formed by a frame constituted by metal wires and/or bands.

## Patentansprüche

1. Maschine für thermische Konditionierung zur thermischen Konditionierung von Nahrungsmittelprodukten, die Folgendes umfasst:
- eine Konditionierkammer (10), innerhalb derer ein vorab bestimmter thermischer Zustand eingestellt ist, und
- ein Fördersystem zur Bewegung einer Vielzahl von Trägern (S), an denen die zu konditionierenden Produkte angeordnet sind, durch die genannte Kammer,
wobei die genannte Kammer **dadurch gekennzeichnet ist, dass** das genannte Fördersystem Folgendes umfasst:
- einen wendelförmigen Förderweg (20), der sich entlang einer Hauptachse (I) und um diese herum erstreckt und eine Vielzahl von Niveaus definiert, wobei der Förderweg durch eine Bahn errichtet ist, auf der die Träger (S) durch Laufen auf dieser, bevorzugt durch Gleiten auf dieser, bewegbar sind, und
- einen Rotor (30), der dafür konfiguriert ist, sich um die Achse zu drehen, und der mit einer Vielzahl quergerichteter oder radialer Arme (31) ausgestattet ist, die den verschiedenen Niveaus des Wegs zugeordnet und dafür konfiguriert sind, jeweils mit mindestens einem auf dem entsprechenden Niveau des Wegs positionierten Träger in Eingriff zu treten, so dass die Drehung des Rotors ein Versetzen des mindestens einen Trägers (S) von dem entsprechenden Niveau auf das oder in Richtung des nächsten Niveaus bewirkt.

2. Maschine nach Anspruch 1, umfassend eine Steuereinheit, die dafür konfiguriert ist, Mittel zum Antreiben des Rotors (30) derart zu steuern, dass während des Betriebs der Maschine der Rotor (R) ein und dieselbe Drehbewegung um einen einem bestimmten vorab definierten Winkelbereich entsprechenden Betrag wiederholt, wobei er jedes Mal aus ein und derselben Ausgangsposition beginnt.

3. Maschine nach Anspruch 2, wobei der vorab definierte Bereich eine Erstreckung von weniger als 360°, bevorzugt weniger als 180° und besonders bevorzugt weniger als 90° besitzt.

4. Maschine nach einem der vorhergehenden Ansprüche, wobei der Rotor (30) darüber hinaus bewegbar ist zwischen einem ersten, abgesenkten Zustand, in dem die Arme (31) mit den auf den entsprechenden Niveaus des Wegs positionierten Trägern (S) in Eingriff stehen, und einem zweiten, angehobenen Zustand, in dem die Arme die Träger (S) überfahren.

5. Maschine nach einem der vorhergehenden Ansprüche, wobei der Rotor (30) in einer gleichzeitig zur Drehbewegung erfolgenden Hubbewegung antreibbar ist, so dass die Arme entlang eines im Wesentlichen dem Förderweg entsprechenden wendelförmigen Wegs bewegt werden.

6. Maschine nach einem der vorhergehenden Ansprüche, umfassend ein Element (62) zur Verteilung von Luft, das in Bezug auf den Rotor (30) feststehend gelagert ist und für jeden Arm (31) des Rotors eine dem Arm entgegengerichtete und mit diesem bewegbare Düse (62A) aufweist.

7. Maschine nach einem der vorhergehenden Ansprüche, wobei die Konditionierkammer (10) eine zylindrische Gestalt mit einer mit der Hauptachse (I) zusammenfallenden Achse besitzt und mit ihren Wänden eng am Förderweg anliegt.

8. Maschine nach Anspruch 1, wobei die Kammer eine bodenseitige Öffnung (6) zum Einlass oder Auslass der Träger besitzt, die mit einem Anfangs- oder Endabschnitt des Förderwegs in Verbindung steht, und wobei die Kammer darüber hinaus eine kopfseitige Öffnung (8) zum Auslass oder Einlass der Träger besitzt, die mit einem End- oder Anfangsabschnitt des Förderwegs (20) in Verbindung steht.

9. Maschine nach Anspruch 1, wobei die Bahn durch einen aus Metalldrähten und/oder -streifen errichteten Rahmen gebildet ist.

## Revendications

1. Machine de conditionnement thermique pour le conditionnement thermique de produits alimentaires, du type comprenant :
- une chambre de conditionnement (10) à l'intérieur de laquelle un état thermique prédéterminé est établi ; et
- un système de convoyage pour le déplacement d'une pluralité de supports (S) à travers la chambre précitée, sur lequel les produits à conditionner sont agencés ;
la machine précitée étant **caractérisée en ce que** le système de convoyage précité comprend :
- un chemin de convoyage hélicoïdal (20) qui s'étend le long et autour d'un axe principal (I) et définit une pluralité de niveaux, où ledit chemin de convoyage est constitué par une piste sur laquelle lesdits supports (S) sont mobiles par défilement sur celle-ci, de préférence par glissement sur celle-ci ; et
- un rotor (30) qui est configuré pour tourner autour dudit axe et est équipé d'une pluralité de bras radiaux ou transversaux (31), qui sont associés aux différents niveaux dudit chemin et sont configurés pour s'engager chacun avec au moins un support positionné au niveau correspondant dudit chemin de sorte que la rotation dudit rotor entraîne le déplacement dudit au moins un support (S) dudit niveau correspondant au ou vers le niveau suivant.

2. Machine selon la revendication 1, comprenant une unité de commande configurée pour commander un moyen d'entraînement dudit rotor (30) de telle manière que, lors du fonctionnement de la machine, ledit rotor (R) répète un seul et même mouvement de rotation d'une quantité égale à une plage angulaire prédéfinie donnée, commençant chaque fois à partir d'une seule et même position initiale.

3. Machine selon la revendication 2, dans laquelle ladite plage prédéfinie a une extension inférieure à 360°, de préférence inférieure à 180°, encore plus préférablement inférieure à 90°.

4. Machine selon l'une quelconque des revendications précédentes, dans laquelle ledit rotor (30) est en outre mobile entre un premier état abaissé dans lequel lesdits bras (31) s'engagent avec les supports (S) positionnés aux niveaux correspondants dudit chemin, et un deuxième état relevé dans lequel lesdits bras passent au-dessus desdits supports (S).

5. Machine selon l'une quelconque des revendications précédentes, dans laquelle ledit rotor (30) peut être entraîné dans un mouvement de soulèvement simultané audit mouvement de rotation de sorte que lesdits bras soient déplacés le long d'un chemin hélicoïdal correspondant sensiblement audit chemin de convoyage.

6. Machine selon l'une quelconque des revendications précédentes, comprenant un élément (62) de distribution d'air monté fixe par rapport audit rotor (30) et présentant pour chaque bras (31) du rotor une buse (62A) positionnée face au bras et mobile avec celui-ci.

7. Machine selon l'une quelconque des revendications précédentes, dans laquelle ladite chambre de conditionnement (10) a une conformation cylindrique ayant un axe coïncidant avec ledit axe principal (I) et, avec ses parois, et est strictement adhérente audit chemin de convoyage.

8. Machine selon la revendication 1, dans laquelle ladite chambre a une ouverture inférieure (6) pour l'entrée ou la sortie des supports qui communique avec un tronçon initial ou final dudit chemin de convoyage, et où ladite chambre a en outre une ouverture supérieure (8) pour la sortie ou l'entrée desdits supports qui communique avec un tronçon final ou initial dudit chemin de convoyage (20).

9. Machine selon la revendication 1, dans laquelle ladite piste est formée par un cadre constitué de fils et/ou de bandes métalliques.
